# EUROPEAN PATENT SPECIFICATION

(11) **EP 0 832 736 B1**
(45) Date of publication and mention of the grant of the patent: **11.12.2002**
(21) Application number: 97115776.3
(22) Date of filing: 11.09.1997
(51) Int. Cl.: B32B 21/10, B27M 3/00, B27D 1/04

(54) **Process for the realisation of a wooden stratified panel of the reinforced type and panel thus obtained**
Verfahren zur Herstellung von verstärkten Holzverbundplatten und eine dadurch erhaltene Platte
Procédé de fabrication de panneaux stratifiés en bois de type renforcé et panneaux ainsi produits

(30) Priority: 13.09.1996 IT TV960113
(43) Date of publication of application: 01.04.1998
(73) Proprietor: Caporello, Mario, 33170 Pordenone (IT); Buoro, Roberto, 31015 Conegliano (TV) (IT)
(72) Inventor: Caporello, Mario, 33170 Pordenone (IT); Buoro, Roberto, 31015 Conegliano (TV) (IT)
(74) Representative: D'Agostini, Giovanni, Dr.

(56) References cited:
- DE-A- 4 325 273
- FR-A- 2 096 943
- FR-A- 2 588 507
- FR-A- 2 690 221
- FR-A- 2 725 149
- GB-A- 2 050 941
- US-A- 4 271 649
- US-A- 4 931 124
- US-A- 5 725 929
- DATABASE WPI Section Ch, Week 7725 Derwent Publications Ltd., London, GB; Class A17, AN 77-44585Y XP002091986 & JP 52 058777 A (JANOME SEIKI KK) , 14 May 1977

## Description

This invention has for object a process for the realisation of a wooden stratified panel of the reinforced type and panel thus obtained.

The innovation, finds particular even if not exclusive application in the building field, more in general in different sectors of technology where it may be necessary resorting to a panel with high mechanical characteristics.

It is known the panel obtained in heartwood, or in material succedaneum of wood or poor wood, that differentiates structurally according to the sectors to which it is directed.

Thus, for example, in the furniture sector there is a great use of panels, utilised in place of the traditional heartwood plane.

This common tendency, in this particular case of the furniture manufacturers, seems justified at least by two factors, on one side it allows to reduce considerably the operating cost of the finished product because in general are concerned wooden panels or succedaneum ones having little value and therefore with an almost inconsiderable cost, increasing the number of the possible customers, on the other because its manufacturing features would make feasible the most various processing and combinations both of shapes and colours.

In some particular uses, as in kitchen or bathroom furniture, a third advantage, though not always noticeable, would regard the fact that thanks to the application of a plastic coating to the support plane, a higher resistance in time would be given mainly to water infiltrations.

In prior art, among the most typical examples for improving a panel, made up of a coating in laminate, the various systems that characterise its carrying out can be grouped essentially in two categories:
- first, starting only with rough subsequently formed flat elements in wooden shaving (or MDF), in connection with one, two or four edges and coated one or two flat parts, in subsequent phases and interchangeable with one another (postforming and pressing);
- second, starting with flat elements, for example, in wood shav ings or MDF already coated by melamine papers suitable or not for being bent, and subsequently unframed for obtaining formed edges.

A so called system of preforming and softforming.

However, notwithstanding the considerable technological store up to now acquired in the sector of the coated plane working, some not adequately solved problems still persist.

These, as a rule are related to the constant optimization of the quality-price ratio, which the firms of the finished furniture sector search continuously, in this case, pushing the firms which produce the semi-finished products for third parties to introduce with regularity some increasingly innovative solutions.

Additionally, it is not always a product appreciated by the consumer, who associates the coated plane with a product qualitatively lesser than the heartwood plane.

The application of the heartwood, is however advised against in a lot of cases, among which for example is included the top for kitchen or bath.

This because it is a surface often subjected to the contact with water, a condition that can favour infiltration, even up to altering the original aesthetic characteristics, as showy slots, very often due also to the natural movement of the wood in time.

To obviate such drawbacks, very often for decorative uses, there was a resort to the use of the strip wood panel.

It in practice, consists of the adjacent and longitudinal association of various wooden strips, also of different kinds, by the interplacing of suitable glue along the contact walls.

Such manufacturing, can provide in the panel two dispositions of the strips, a first one, by disposing in the same plane and parallel some strips having the same length, in which the sum of the respective widths determines consequently the width of the panel.

A second instead, in which the strips result being longitudinally placed staggered one with the other, in such a case, each strip in the association phase presents a length different from that of the adjacent one.

From the aesthetic and technical view-point, the difference is substantial, in the first case, offering a solution of continuity with a fair mechanical capacity to bear breaking loads transversal to the direction of the staves or of the strips, in the second a more lively aesthetics, also for the different possibility of composition, but a lower strength of the plane.

In both the solutions with strips now mentioned, we can additionally notice the fact that they are somewhat weak in bearing longitudinal loads, therefore in the direction of the staves disposition, with a strong propensity to breakage.

They additionally, are more subject to possible water infiltrations, for the presence of greater conjunction lines, an objective danger, not always possibly safeguarded by a careful working.

A second typology of strip panels is widely used also in the building sector, e.g.
a sandwich-like structure according to GB-A-2 050 941, which discloses a reinforced laminate wood panel comprising a plurality of wood-panels stratified with fibre-reinforced melamine and/or urea resin sheets (ref. Page 1 column 2, line 94) and
a base board forming a sheet from polypropylene material with rough embossed surface to be glued interposed between wood, plywood, fibreboard, particleboard, metal, glass and plastic sheets as disclosed in JP-A-52058777.

### Other Wood multistrata glued structures are disclosed in:

DE-A-43 25 273 (glued wood strata), FR-A-2 096 943 (use of glass reinforced polyester resin), US-A-5725929 and FR-A-2725149 (both using intermediate fiber reinforced composite polymer sheet material).

Other close solution provides both the upper layer and the lower one obtained by a series of strips placed along the same side, in this case longitudinally.

A third intermediate layer, is analogously obtained by a series of strips joined in adjacent way, but placed transversely with respect to the two layers, upper and lower one.

Regarding the joining of said three layers, it is carried out by interposition of glue, of the known type, and then the group is kept in shape until the completion of the cycle.

The characteristics of said panel, because of a good resistance to the deformation, make it particularly useful for example in the installation of the formworks for the concrete casting.

It, however still presents some limits, being possible the breakage, in one or in the other way, with total detachment of the concerned parts and material fragmentation along the separation line .

The firms of the sector, therefore, for a long time have been thus directed, with the main purpose of finding innovative and often improving solutions from the technical view-point, respect to the ones already existing.

The aim of this invention is also that to obviate the above-mentioned drawbacks.

This and other purposes are reached by this innovation according to the characteristics as in the included claims, solving the mentioned problems by a process for the making of a wooden stratified panel, of the reinforced type and panel thus obtained, in which it is provided the use of at least two semi-finished panels of the strip type, on which:
- making a knurling in connection with at least one of the two specular and greater surfaces of each strip panel;
- prearranging in logic correspondence on both the knurled fronts of the two panels, a glue layer made up of ureic and melamine glues;
- supporting on the same knurled surface of a underlying panel a fiberglass net;
- superimposing the second panel, having care of making the side provided with knurling coincide;
- and finally, subjecting the stratified structure to a cycle of shape maintenance on the inside of a thermostated press.

In this way, through the considerable creative contribution whose effect represents an immediate technical progress, are achieved some advantages, which allow to improve considerably the offer on the market.

From the structural view-point, the panel with the net, results, respect to the multi-purpose panels presently existing, remarkably safer and more resistant, in this case, almost stabilised and of contained weight.

It in practice, by tolerating minimum deformations, is particularly useful for various purposes, obviating in case of structure yielding, to the separation of the single portions, and in any way at least partially, to the fragmentation along the breaking point.

Finally, it allows to ensure an increment of the bending stress.

Other advantageous peculiarities, can be summarised in the fact that the use of such panel does not subvert the traditional use techniques, being able to be used according to the sector uses.

These, and other advantages will appear from the following specific description of a preferred solution with the aid of the schematic drawings included whose details are not to be considered as limitative but only illustrative.

Figure 1., represents a perspective view, of an assembling cycle of a semi-finished panel of the strip type.

Figure 2., represents a view always in perspective of a semi-finished panel of the strip type, in which is pointed out a cut line on horizontal-plane for the subdivision by two halves.

Figure 3., represents the panel shown in previous figure subdivided in half.

Figure 4., represents a semi-finished panel, on which has been carried out, partially, a knurling.

Figure 5., represents a total view of a joining phase of the two strip panels, knurled in connection with a specular surface, and on which has been interposed a net.

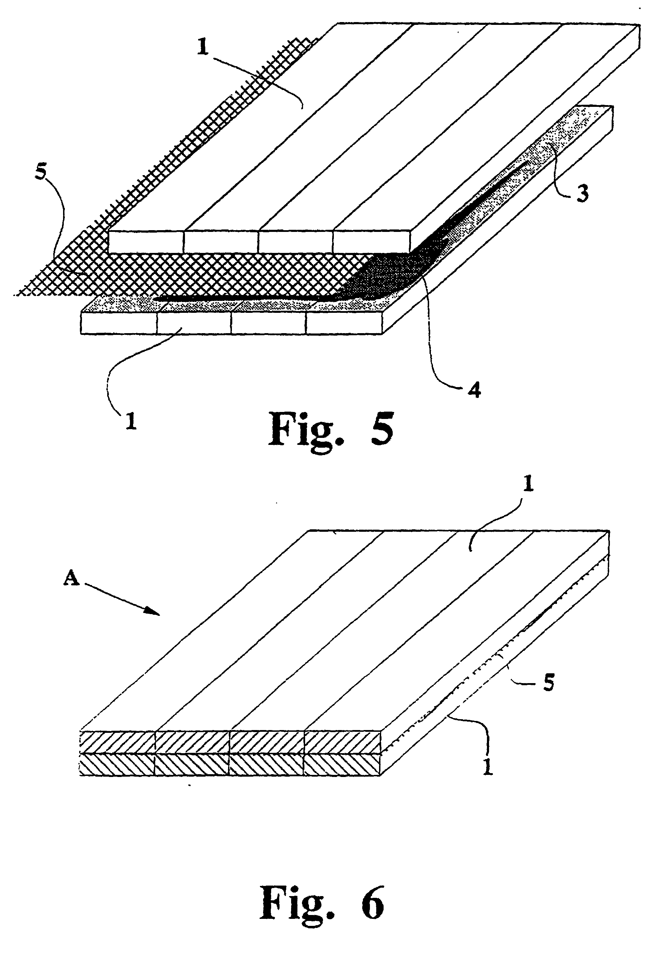

Finally, Figure 6., represents in perspective, a finished stratified panel.

Referring also to the figure, a process for the realisation of a wooden stratified panel of the reinforced type and panel thus obtained (A), requires at first, the realisation and/or the acquisition on the market of a semi-finished panel (1), of the strip type, obtained by the joining, by glue interposition, adjacent and on the same plane of a plurality of strip-like elements (1', 1"), parallel and symmetric.

In an alternative solution, on the strip panel (1) it is possible to provide, the prearranging of wooden heartwood panels, also of the rough type.

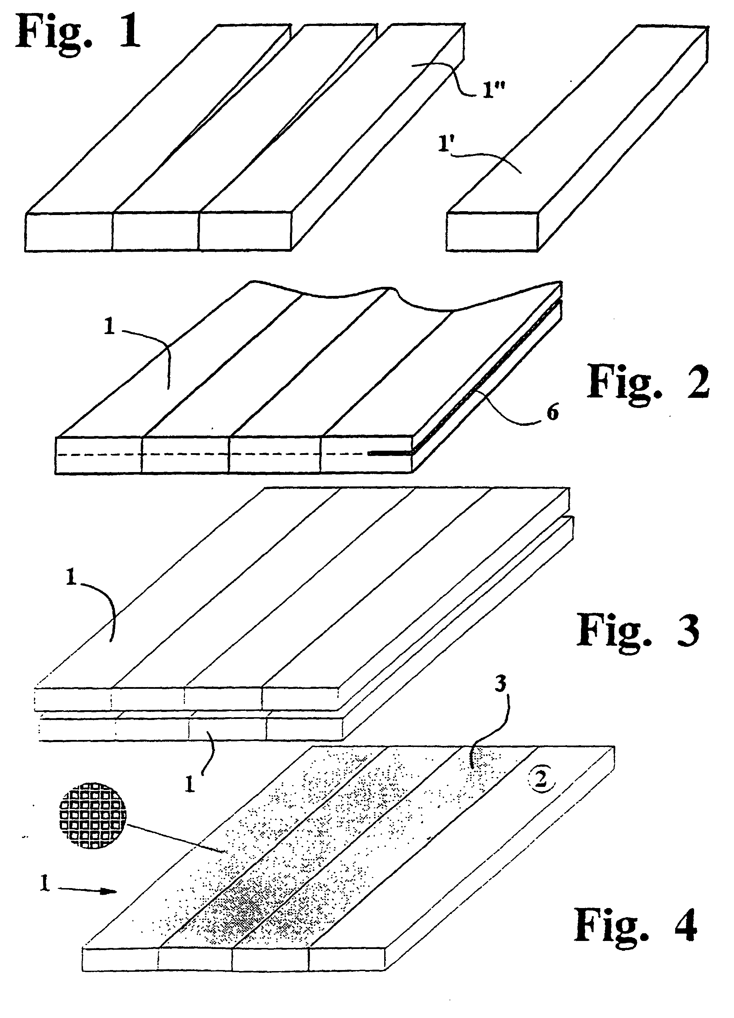

The strip panel (1), can in a first solution be subdivided by cutting (6) on horizontal plane, as shown in Figure 2., in two halves, in such a way to obtain two strip panels (1) perfectly symmetric and with the wished thickness.

Alternatively, can be directly supplied two panels (1) in place of one to be subjected to a following forming cycle.

Therefore, each panel (1), is in a following phase, transferred to a station provided with calender, which provides to impress in connection with at least one surface (2), of said panel (1), a typical knurling that allows to obtain, in this case on one of the two greater surfaces, many small cells (3).

The passage that follows, must provide the distribution wholly on the surface (2) knurled (3), of each panel (1), of a glue layer (4) of the complex type being made up of a particular mixture of ureic and melamine glues.

Therefore, on the underlying panel thus prearranged, it is applied a net in fiber glass (5), said net, being able to concern locally also only one part of the surface of said panel (1).

Therefore, on said first panel (1) on which has been distributed the fiberglass net (5), rests a second panel (1), with the surface (2) knurled (3) and scattered of glue (4) directed downwards, corresponding to that of the underlying panel (1).

Finally, as conclusion of the working cycle, said sandwich, is introduced in a press of the thermostated type at 150°, for then being extracted and packaged at the end.

## Claims

1. Process for the realisation of a wooden stratified panel of the fibreglass reinforced type using at least two rough and/or semi-finished panels (1), realized of the glued-wood-strip type, obtained by the glue-joining, on the same plane of a plurality of strip-like wood elements (1', 1"), **characterised in that**,
- each panel (1) is transferred to a station provided with calender, which provides to impress in connection with at least one surface (2) of said panel (1) a knurling that allows to obtain, in this case on one of the two greater surfaces, a knurled surface with many small cells (3);
- distributing in logic correspondence on both specular fronts (2) of the two opposed knurled surfaces of the panels (1) to join a glue layer (4);
- resting on the same surface (2) of an underlying panel (1) a fiber glass net (5);
- superimposing the second panel (1), having care of making coincide the side (2) provided with knurling (3);
- and finally, subjecting the sandwich to a form maintenance cycle, on the inside of a thermostated press.

2. Process according to claim 1, **characterised in that** the glue layer laid on the surface (2) of the panels (1) is made up with ureic and melamine glues.

3. Process according to claims 1 or 2, **characterised in that** the previously obtained strip panel (1) is subdivided by cutting on horizontal-plane in two halves, in such a way to obtain two strip panels (1) perfectly symmetric before knurling them.

4. Process according to anyone of the previous claims, **characterised in that** a knurling (3) is realized on a surface (2) of a panel (1) by impression of a reticulated surface, or provided with a plurality of cells such for dimensionally housing at least one part of the mesh of a net in fiber glass (5).

5. A stratified panel according to anyone of the previous claims, **characterised in that** it consists of two or more knurled glued-wood-strip panels (1) superimposed and glued (4), on which is interposed at least one fiber glass net (5).

## Patentansprüche

1. Verfahren zur Herstellung einer geschichteten verstärkten Holzplatte mit Glasfaser unter Verwendung von mindestens zwei Rohund/oder Halbzeugplatten (1), aus verleimten Holzstreifen, erhalten durch Verleimung, auf derselben Ebene, einer Anzahl von streifenähnlichen Holzelementen (1', 1", 1n), **gekennzeichnet dadurch, dass**
- jede Platte (1) wird zu einer Station mit Kalander verbracht, die in Verbindung mit mindestens einer Oberfläche (2) von besagter Platte (1) eine Rändelung aufbringt, so dass, in diesem Fall auf eine der beiden größeren Oberflächen, eine gerändelte Oberfläche mit vielen kleinen Zellen (3) entsteht;
- durch Verteilen einer Leimschicht (4) in logischer Korrespondenz auf beiden spiegelbildlichen Vorderseiten (2) der beiden entgegensetzten gerändelten Oberflächen der zu verbindenden Platten (1) ;
- Aufliegen eines Glasfasernetzes (5) auf derselben Oberfläche (2) einer darunterliegenden Platte ( 1);
- Auflegen der zweiten Platte (1), wobei sorgfältig darauf zu achten ist, dass die Seite (2) mit Rändelung (3) übereinstimmt;
- und schließlich Durchführung eines Formwartungszyklus für diese Sandwichstruktur, in einer thermostatisierten Presse.

2. Verfahren nach Anspruch 1 und 2, **gekennzeichnet dadurch, dass** die Leimschicht auf der Oberfläche (2) der Platten (1) aus Harn- und Melaminklebstoffen besteht.

3. Verfahren nach Anspruch 1 und 2, **gekennzeichnet dadurch, dass** die vorher erhaltene Streifenplatte (1) durch horizontales Sägen in zwei Hälften geteilt wird, um vor ihrer Rändelung zwei vollkommen symmetrische Streifenplatten (1) zu erhalten.

4. Verfahren, nach den vorherigen Ansprüchen, **gekennzeichnet dadurch, dass** eine Rändelung (3) aus der Herstellung auf einer Oberfläche (2) einer Platte (1), durch Aufdruck einer Netzoberfläche bestehen kann, oder mit einer Vielzahl von Zellen, um mindestens einen Teil des Geflechts eines Netzes aus Faserglas (5) aufzunehmen.

5. Geschichtete Platte nach den vorherigen Ansprüchen, **gekennzeichnet dadurch, dass** sie aus zwei oder mehr gerändelten Platten (1) aus verleimten Holzstreifen besteht, die übereinandergelegt und verleimt (4) sind, wobei mindestens ein Glasfasernetz (5) dazwischenliegt.

## Revendications

1. Procédé pour la réalisation d'un panneau stratifié en bois du type en fibre de verre renforcé en utilisant au moins deux panneaux bruts et/ou semi-finis (1), réalisé avec des bandes en bois collées, obtenu par couplage par collage, sur le même plan, d'une pluralité d'éléments en bois similaires à des bandes (1, 1", 1n), **caractérisé en ce que**,
- chaque panneau (1) est transféré à une station pourvu de calandre, laquelle empreint, en connexion avec au moins une surface (2) dudit panneau (1), un molettage qui permet d'obtenir, en ce cas sur une des deux surfaces plus grandes, une surface molettée avec beaucoup de petites cellules (3);
- en distribuant une couche de collant (4) en correspondance logique sur les deux fronts spéculaires (2) des deux surfaces molettées opposées des panneaux (1) à unir;
- un réseau de verre de fibre (5) repose sur la même surface (2) d'un panneau qui se trouve en dessous (1);
- en superposant le second panneau (1), en faisant coïncider soigneusement le côté (2) pourvu du molettage (3);
- et enfin, en assujettant la structure à sandwich à un cycle d'entretien de forme, à l'intérieur d'une presse avec thermostat.

2. Procédé selon les revendications 1 et 2, **caractérisé en ce que** la couche de collant posé sur la surface (2) des panneaux (1) est faite avec des colles uréique et de mélamine.

3. Procédé selon les revendications 1 et 2, **caractérisé en ce que** le panneau en bandes précédemmente obtenu (1) est subdivisé en coupant sur un plan horizontal, en deux moitiés, pour obtenir deux panneaux en bandes (1) parfaitement symétriques avant de les moletter.

4. Procédé, selon les revendications précédentes, **caractérisé en ce qu'**un molettage (3) peut consister dans la réalisation d'un panneau (1) sur une surface (2), par l'impression d'une surface tramée, ou pourvu d'une pluralité de cellules pour loger au moins une partie de l'engrenage d'un réseau en verre de fibre (5).

5. Un panneau stratifié selon les revendications précédentes, **caractérisé en ce qu'**il consiste de deux ou plus panneaux (1) à bandes en bois collées molettées superposées et collées (4), étant interposé au moins un réseau de verre de fibre (5).
